# EUROPÄISCHE PATENTSCHRIFT

(11) **EP 1 726 178 B1**
(45) Veröffentlichungstag und Bekanntmachung des Hinweises auf die Patenterteilung: **01.12.2010**
(21) Anmeldenummer: 05707795.0
(22) Anmeldetag: 18.01.2005
(51) Int. Cl.: H04W 24/02

(54) **Verfahren zur Steuerung und Auswertung eines Nachrichtenverkehrs einer Kommunikationseinheit durch eine erste Netzwerkeinheit innerhalb eines Mobilfunksystems, sowie dazugehörige Kommunikationseinheit und erste Netzwerkeinheit**
Method for the control and evaluation of a message traffic of a communication unit by means of a first network unit within a mobile radio system, pertaining communication unit and first network unit
Procédé de commande et d'évaluation d'un trafic de messages d'une unité de communication par l'intermédiaire d'une première unite de réseau au sein d'un système de téléphonie mobile, unité de communication correspondante et première unité de réseau

(30) Priorität: 26.02.2004 DE 102004009289
(43) Veröffentlichungstag der Anmeldung: 29.11.2006
(73) Patentinhaber: SIEMENS AKTIENGESELLSCHAFT, 80333 München (DE)
(72) Erfinder: BECKMANN, Mark, 38124 Braunschweig (DE); ECKERT, Michael, 38122 Braunschweig (DE); HANS, Martin, 31162 Bad Salzdetfurth/ Heinde (DE)
(86) Internationale Anmeldenummer: PCT/EP2005/050190
(87) Internationale Veröffentlichungsnummer: WO 2005/084058

(56) Entgegenhaltungen:
- "Universal Mobile Telecommunications System (UMTS); Telecommunication management; Charging management; Charging data description for the Packet Switched (PS) domain (3GPP TS 32.215 version 5.4.0 Release 5); ETSI TS 132 215" ETSI STANDARDS, EUROPEAN TELECOMMUNICATIONS STANDARDS INSTITUTE, SOPHIA-ANTIPO, FR, Bd. 3-SA5, Nr. V540, Juni 2003 (2003-06), XP014009948 ISSN: 0000-0001
- "Digital cellular telecommunication system (Phase 2+); Universal Mobile Telecommunications System (UMTS); Service Aspects; Charging and billing (3GPP TS 22.115 version 5.4.0 Release 5)" ETSI STANDARDS, EUROPEAN TELECOMMUNICATIONS STANDARDS INSTITUTE, 1. Januar 2004 (2004-01-01), Seiten 1-23, XP002329416

## Beschreibung

Der Erfindung liegt die Aufgabe zugrunde, die Steuerung und Auswertung des Nachrichtenverkehrs einer Kommunikationseinheit durch eine erste Netzwerkeinheit innerhalb eines Mobilfunksystems in einfacher und effizienter Weise bereitzustellen. Diese Aufgabe wird durch folgendes erfindungsgemäße Verfahren gelöst:
Verfahren zur Steuerung und Auswertung eines Nachrichtenverkehrs einer Kommunikationseinheit durch eine erste Netzwerkeinheit innerhalb eines Mobilfunksystems, indem alle Nachrichten des Nachrichtenverkehrs über die erste Netzwerkeinheit geschickt werden, indem durch die erste Netzwerkeinheit mit Hilfe einer oder mehrerer Nutzungsinformationen der Kommunikationseinheit KE entschieden wird, ob eine oder mehrere Nachrichten an eine zweite Netzwerkeinheit zur Weiterbearbeitung weitergeleitet oder abgeblockt werden, und indem durch die erste Netzwerkeinheit mit Hilfe einer oder mehrerer Nutzungsinformationen der Kommunikationseinheit entschieden wird, ob die jeweilige Nachricht des Nachrichtenverkehrs durch die erste Netzwerkeinheit in einer Protokolldatei protokolliert wird, bei dem spezifischer Satz von Nutzungsinformationen (NI) jeweils einer Nutzeridentität (NID) zugeordnet wird, wobei der spezifische Satz von Nutzungsinformationen (NI) zur Steuerung und Auswertung mindestens einer Nachricht des Nachrichtenverkehrs der Kommunikationseinheit (KE) verwendet wird und die bei dem die Nutzeridentität (NID) einer Applikation (AP) der Kommunikationseinheit (KE) zugeordnet wird.

Durch das erfindungsgemäße Verfahren wird in vorteilhafter Weise der Nachrichtenverkehr einer Kommunikationseinheit gesteuert und ausgewertet. Unter Zuhilfenahme von einer oder mehreren Nutzungsinformationen der jeweiligen Kommunikationseinheit können für verschiedene Kommunikationseinheiten unterschiedliche und individuelle Entscheidungsregeln zur Steuerung und Auswertung herangezogen werden.

Des Weiteren wird durch das erfindungsgemäße Verfahren in vorteilhafter Weise die Protokollierung des Nachrichtenverkehrs einer Applikation der jeweiligen Kommunikationseinheit ermöglicht. Da die Protokollierung auf Applikationsebene durchgeführt wird, kann die Protokollierung von dem in den einzelnen Nachrichten enthaltenen Inhalt, also den Nachrichtendaten, abhängig gemacht werden. So kann bei der Protokollierung die Datenmenge von Nachrichten mit multimedialem Inhalt, wie z.B. Videosequenzen oder Sprachaufzeichnungen, als kostenpflichtiges Datenvolumen registriert werden, und Nachrichten mit Steuerinformationen von der Protokollierung ausgeschlossen werden.

Die Erfindung betrifft weiterhin auch eine erste Netzwerkeinheit zur Steuerung und Auswertung eines Nachrichtenverkehrs einer Kommunikationseinheit innerhalb eines Mobilfunksystems, mit einer Empfangseinheit, mittels der alle Nachrichten des Nachrichtenverkehrs der Kommunikationseinheit empfangbar sind, mit einer Sendeeinheit, mittels der alle Nachrichten des Nachrichtenverkehrs absendbar sind, und mit einer Verarbeitungseinheit, mittels der entscheidbar ist, ob mindestens eine Nachricht des Nachrichtenverkehrs aufgrund einer oder mehrerer Nutzungsinformationen der Kommunikationseinheit an eine zweite Netzwerkeinheit zur Weiterbearbeitung weitergeleitet oder abgeblockt wird, und mittels der entscheidbar ist, ob mindestens eine Nachricht des Nachrichtenverkehrs aufgrund einer oder mehrerer Nutzungsinformationen der Kommunikationseinheit durch die erste Netzwerkeinheit in einer Protokolldatei protokolliert wird, wobei ein spezifischer Satz von Nutzungsinformationen jeweils einer Nutzeridentität zugeordnet wird, wobei der spezifische Satz von Nutzungsinformationen zur Steuerung und Auswertung mindestens einer Nachricht des Nachrichtenverkehrs der Kommunikationseinheit verwendet wird, und wobei die Nutzeridentität eine Applikation der Kommunikationseinheit KE zugeordnet ist.

Die Erfindung betrifft auch eine Kommunikationseinheit bei der durch eine erste Netzwerkeinheit der Nachrichtenverkehr innerhalb eines Mobilfunksystems gesteuert und ausgewertet wird, mit einer Empfangseinheit, mittels der alle Nachrichten des Nachrichtenverkehrs empfangbar sind, und mit einer Sendeeinheit, mittels der alle Nachrichten des Nachrichtenverkehrs absendbar sind.

Das Dokument 3GPP TS 32.215 Version 5.4.0 Release 5 (ETSI TS 132.15) offenbart ein Verfahren zur Steuerung und Auswertung eines Nachrichtenverkehrs einer Kommunikationseinheit durch eine erste Netzwerkeinheit innerhalb eines Mobilfunksystems.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:
- Figur 1: in schematischer Darstellung eine Anordnung zur Steuerung und Auswertung eines Nachrichtenverkehrs einer Kommunikationseinheit durch eine Netzwerkein- heit, die sich aus einer Gruppe von Netzwerkelemen- ten zusammensetzt, innerhalb eines Mobilfunksystems nach einer ersten Variante des erfindungsgemäßen Verfahrens sowie zugehörige Modifikationen,
- Figur 2: ein Ablaufdiagramm eines möglichen Nachrichtenver- kehrs für ein Anwendungsbeispiel nach Figur 1,
- Figur 3: in schematischer Darstellung ein möglicher Aufbau einer abgerufenen Nutzungsinformation mit zwei Nut- zeridentitäten,
- Figur 4: in schematischer Darstellung eine Anordnung zur Steuerung und Auswertung eines Nachrichtenverkehrs einer Kommunikationseinheit durch eine Netzwerkein- heit, die sich aus einer Gruppe von Netzwerkelemen- ten zusammensetzt, innerhalb eines Mobilfunksys- tems, unter Verwendung des IMS-Standards nach einer weiteren Variante des erfindungsgemäßen Verfahrens, sowie zugehörige Modifikationen,
- Figur 5: ein Ablaufdiagramm eines möglichen Nachrichtenver- kehrs für ein Anwendungsbeispiel nach Figur 4,
- Figur 6: eine mögliche Ergänzung des Ablaufdiagramms für ein Anwendungsbeispiel nach Figur 5, und
- Figur 7: ein mögliches Ablaufdiagramm eines Nachrichtenver- kehrs für ein weiteres Anwendungsbeispiel, bei dem Nachrichten mit SIP-Signalisierung und Nachrichten mit Nutzdaten, zwischen Kommunikationseinheit und Netzwerkeinheit, assoziiert werden.

### 1. Erstes Ausführungsbeispiel

### 1.1 Vorrichtung

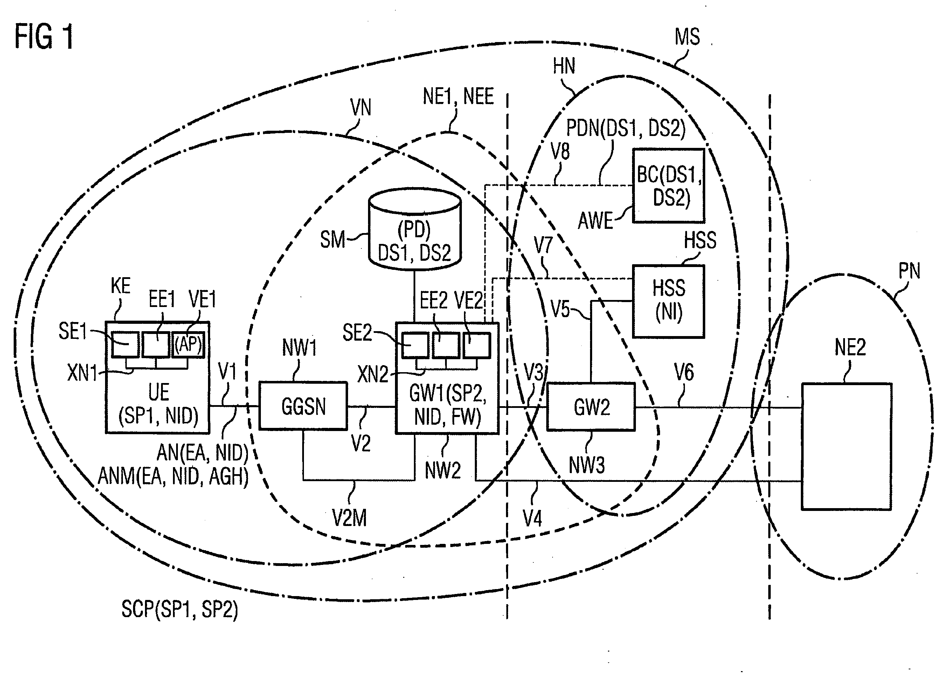

In Figur 1 ist eine erste mögliche Vorrichtung zur Ausführung des erfindungsgemäßen Verfahrens dargestellt. Figur 1 zeigt eine vereinfachte Darstellung einer möglichen Netzwerkarchitektur. In der Mitte von Figur 1 befindet sich ein Heimnetzwerk HN (HN - Home Network) einer Kommunikationseinheit KE, die sich in Figur 1 in einem besuchten Netzwerk VN (VN - Visited Network) aufhält. Dieser Fall ist im Allgemeinen auch als "Roaming" bekannt. Das Heimnetzwerk HN und das besuchte Netzwerk VN befinden sich in einem Mobilfunksystem MS. Die Kommunikationseinheit KE ist beispielsweise in einem Funkgerät nach GSM-Standard (GSM - Global System for Mobile) oder UMTS-Standard (UMTS - Universal Mobile Telecommunications System) untergebracht. Diese Kommunikationseinheit KE erlaubt das Senden von Nachrichten mittels seiner Sendeeinheit SE1 als auch das Empfangen von Nachrichten mittels seiner Empfangseinheit EE1. Des Weiteren verfügt die Kommunikationseinheit KE über eine Verarbeitungseinheit VE1, die das Ausführen z.B. einer Applikation AP zulässt. Diese Applikation AP ist insbesondere eine Browser-Anwendung oder eine Push-to-Talk Anwendung. Die Empfangseinheit EE1, die Sendeeinheit SE1 und die Verarbeitungseinheit VE1 sind mittels eines Verbindungsnetzwerkes XN1 verbunden und damit in der Lage, Informationen auszutauschen.

Die Kommunikationseinheit KE ist im besuchten Netzwerk VN mit einem ersten Netzwerkelement NW1 über eine erste Verbindung V1 verbunden. Dieses erste Netzwerkelement NW1 ist insbesondere ein GGSN (GGSN - Gateway GPRS Support Node) (GPRS - General Packet Radio System). Diese erste Verbindung V1 wird mit Hilfe der Prozedur mit einem Namen PDP Context Activation Procedure (PDP - Packet Data Protocol) aufgebaut, wie sie in 3GPP (3GPP - 3rd Generation Partnership Project) TS 23.060 Version 5.3.0 "General Packet Radio Service GPRS", Stage 2 beschrieben ist. Wähnend des Aufbaus dieser ersten Verbindung V1 wird festgelegt, dass diese erste Verbindung V1 lediglich für den Austausch von Nachrichten, wie z.B. Nachrichten mit Nutzdaten ND, zwischen der Kommunikationseinheit KE und dem ersten Netzwerkelement NW1 verwendet werden darf. Als Nutzdaten ND sind vorzugsweise Daten, wie z.B. ein Bild oder eine Sprachaufzeichung, jedoch keine Signalisierungsinformationen zu verstehen. Alle Nachrichten mit Nutzdaten ND, die auf dieser ersten Verbindung V1 gesendet werden, werden automatisch von dem ersten Netzwerkelement NW1 über eine zweite Verbindung V2 an ein zweites Netzwerkelement NW2 weitergeleitet. Das zweite Netzwerkelement NW2 ist vorzugsweise ein Daten-Gateway.

Das zweite Netzwerkelement NW2 hat zum einen eine vierte Verbindung V4 in ein öffentliches, paket-orientiertes Netzwerk PN (PN - Public Network), wie beispielsweise dem Internet. Das öffentliche, paket-orientierte Netzwerk PN umfasst beispielsweise eine zweite Netzeinheit NE2, wie z.B. einen Server mit Videosequenzen. Zum anderen existiert auch eine dritte Verbindung V3 zu einem dritten Netzwerkelement NW3, welches sich im Heimnetzwerk HN der Kommunikationseinheit KE befindet. Das dritte Netzwerkelement NW3 ist vorzugsweise ein Daten-Gateway.

Weiterhin ist das dritte Netzwerkelement NW3 mit einer Datenbank HSS, vorzugsweise einem Home Subscriber Service, über eine fünfte Verbindung V5 vernetzt. Diese Datenbank HSS beinhaltet nutzerbezogene Informationen der Kommunikationseinheit KE. Außerdem ist das dritte Netzwerkelement NW3 über eine sechste Verbindung V6 mit dem öffentlichen, paket-orientierten Netzwerk PN verbunden. Zusätzlich kann das zweite Netzwerkelement NW2 im besuchten Netzwerk VN direkt mit der Datenbank HSS verbunden sein. Dies ist in Figur 1 mit einer gestrichelten siebten Verbindung V7 angedeutet.

Eine erste Netzwerkeinheit NE1 kann aus mehreren Netzwerkelementen NEE bestehen. In Figur 1 umfasst das erste Netzwerkelement NE1 das erste, zweite und dritte Netzwerkelement NW1, NW2, NW3. Für den Fall, dass sich die Kommunikationseinheit KE in ihrem Heimnetzwerk HN befindet, kann das zweite und dritte Netzwerkelement NW2 bzw. NW3 in einem einzigen Netzwerkelement untergebracht sein, das die Funktionalitäten des zweiten und dritten Netzwerkelements NW2 bzw. NW3 abdeckt. Die erste Netwerkeinheit NE1 umfasst eine Sendeeinheit SE2 zum Übermitteln von Nachrichten und eine Empfangseinheit EE2 zum Entgegennehmen von Nachrichten. Daneben beinhaltet sie eine Verarbeitungseinheit VE2 zur Steuerung und Auswertung eines Datenverkehrs der Applikation AP der Kommunikationseinheit KE. Die Sendeeinheit SE2, die Empfangseinheit EE2 und die Verarbeitungseinheit VE2 können mittels eines Verbindungsnetzwerkes XN2 Informationen austauschen. In Figur 1 enthält jedes Netzwerkelement NEE jeweils eine eigene Sendeeinheit, eine eigene Empfangseinheit, eine eigene Verarbeitungseinheit und ein eigenes Verbindungsnetzwerk. Exemplarisch ist in Figur 1 für das zweite Netzwerkelement NW2 die Sendeeinheit SE2, die Empfangseinheit EE2, die Verarbeitungseinheit VE2 und das Verbindungsnetzwerk XN2 abgebildet.

### 1.2 Anfragenachricht

Mit Hilfe von Figur 1 wird im Folgenden die Authentifizierung einer Kommunikationseinheit näher erläutert. Diese Authentifizierung ist notwendig, damit das zweite Netzwerkelemen- NW2 feststellen kann, ob eine Kommunikationseinheit tatsächlich die ist, für die sie sich ausgibt und ob diese Fommunikationseinheit berechtigt ist, Nachrichten über das zweite Netzwerkelement NW2 mit dem öffentlichen, paket-orientierten Netzwerk PN auszutauschen.

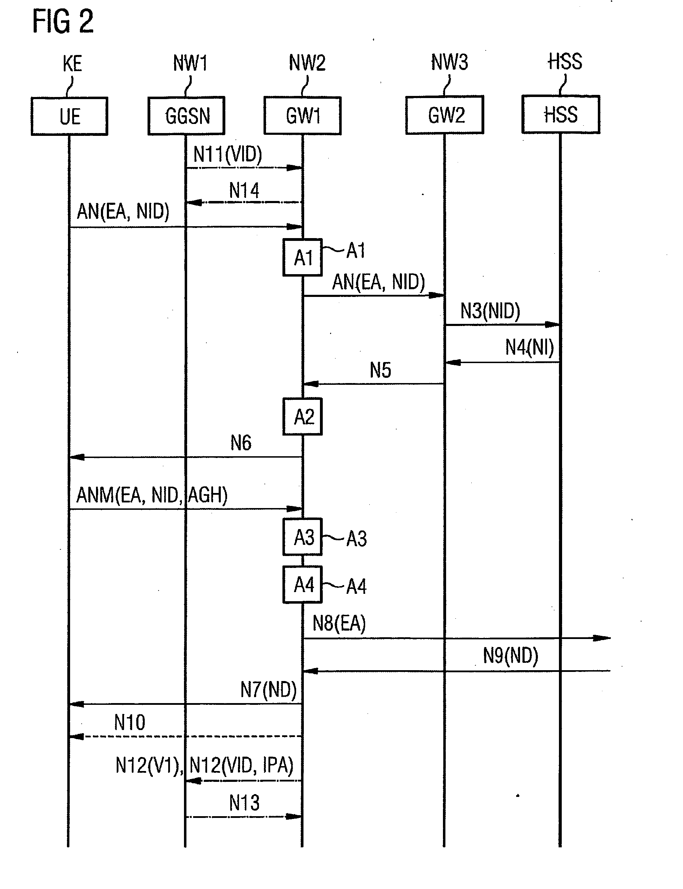

In Figur 2 wird ein Ablaufdiagramm eines möglichen Nachrichtenverkehrs dargestellt, der für die Authentifizierung notwendig ist. Insbesondere wird hierbei auf die Problematik des Nachrichtenaustauschs zwischen der Kommunikationseinheit KE und dem öffentlichen, paket-orientierten Netzwerk PN eingegangen.

Wenn die Kommunikationseinheit KE Nachrichten, zum Beispiel Nachrichten mit Nutzdaten ND, vom öffentlichen, paket-orientierten Netzwerk PN anfordert, oder Nachrichten an dieses versenden möchte, schickt die Kommunikationseinheit KE eine Anfragenachricht AN an das zweite Netzwerkelement NW2. Für den Fall, dass das HTTP-Protokoll (HTTP - Hyper Text Transfer Protocol) verwendet wird, handelt es sich bei dieser Anfragenachricht AN um einen HTTP-Request. In dieser Anfragenachricht AN ist eine Empfängeradresse EA enthalten, von der Nutzdaten ND angefordert und/oder geschickt werden. Die Empfängeradresse EA kann in Form einer URI (URI - Unique Resource Indentifier) gestaltet sein. Zur Authentifizierung der Kommunikationseinheit KE kann ein Mechanismus nach IETF (IETF - International Engineering Task Force) RFC (RFC - Request For Comments) 3310 "Hyper Text Transfer Protocol (HTTP) Digest Authentification Using Authentification And Key Agreement (AKA)", siehe www.ietf.org, verwendet werden. Dazu wird in die Anfragenachricht AN eine Informationszeile mit einem Namen "Authorization" eingefügt. Diese umfasst unter anderem auch Informationen über eine Nutzeridentität NID.

### 1.3 Nutzeridentität

Eine Nutzeridentität NID stellt eine eindeutige Kennzeichnung einer bestimmten Kommunikationseinheit, z.B. der Kommunikationseinheit KE, dar. Aufgrund der Informationszeile mit dieser Nutzidentität NID kann das zweite Netzwerkelement NW2 in einem ersten Entscheidungsschritt A1 feststellen, zu welchem Netzwerk, z.B. dem Heimnetzwerk HN, die Kommunikationseinheit KE gehört. Außerdem wird festgestellt, ob das zweite Netzwerkelement NW2 bereits eine oder mehrere Authentifizierungsinformationen für die anfragende Kommunikationseinheit KE gespeichert hat. Da das zweite Netzwerkelement NW2 noch über keine derartigen Authentifizierungsinformationen verfügt, leitet daher das zweite Netzwerkelement NW2 die Anfragenachricht AN an die dritte Netzwerkeinheit NW3 weiter. Es wird davon ausgegangen, dass die dritte Verbindung V3 gesichert ist und kein Dritter die Möglichkeit hat, Nachrichten abzufangen, zu verändern oder zu lesen.

### 1.4 Nutzungsinformation

Im folgenden Schritt erfragt das dritte Netzwerkelement NW3 mit einer dritten Nachricht N3, die die Nutzeridentität NID umfasst, bei der Datenbank HSS vorzugsweise folgende Nutzungsinformationen NI für die Kommunikationseinheit KE ab:
- Ein oder mehrere zweite Schlüssel SP2, die zu Authentifizierung und Verschlüsselung von Nachrichten für die Kommunikationseinheit KE von dem zweiten Netzwerkelement NW2 benutzt werden sollen;
- Eine Herausforderung HEF, die zur Authentifizierung durch die Kommunikationseinheit KE benutzt werden soll, siehe beispielsweise IETF RFC 3310;
- Eine oder mehrere Filteranweisungen FW.

Im Folgenden wird angenommen, dass lediglich ein zweiter Schlüssel SP2 von der Datenbank DB abgefragt wird.

### 1.5 Filteranweisung

Diese Filteranweisungen FW umfassen insbesondere eine oder mehrere der folgenden Kriterien:
- Eine oder mehrere positive Empfängeradressen PEA, die von der Kommunikationseinheit KE adressierbar sind;
- Eine oder mehrere negative Empfängeradressen NEA, die von der Kommunikationseinheit KE nicht adressierbar sind;
- Eine oder mehrere zu protokollierende Empfängeradressen XEA, die von der ersten Netzwerkeinheit NE1 protokolliert
Werden sollen. In Figur 1 wird die Protokollierung durch das zweite Netzwerkelement NW2 durchgeführt.

Mit Hilfe dieser Filteranweisungen FW wird es dem zweiten Netzwerkelement NW2 ermöglicht, den Zugang der Kommunikationseinheit KE auf eine oder mehrere bestimmte Empfängerdressen EA im öffentlichen, paket-orientierten Netzwerk PN zu beschränken. Zusätzlich können diese Filteranweisungen FW auch dazu verwendet werden, dem zweiten Netzwerkelement NW2 mitzuteilen, Zugriffe auf bestimmte Empfängerdressen EA separat von anderen Zugriffen zu erfassen. Da einer Kommunikationseinheit KE mehrere Nutzeridentitäten NID zugeordnet sein können, können eine oder mehrere Filteranweisungen FW explizit einer bestimmten Nutzeridentität NID zugeordnet werden. So ist zweckmäßigerweise jeweils eine Nutzeridentität NID jeweils einer Applikation AP zugeordnet.

Mit Hilfe einer vierten Nachricht N4 werden diese Nutzungsinformationen NI von der Datenbank HSS an das dritte Netzwerkelement NW3 übertragen. Das dritte Netzwerkelement NW3 sendet im Folgenden diese Nutzungsinformationen NI in einer fünften Nachricht N5 an das zweite Netzwerkelement NW2. Für den Fall, dass dafür das HTTP-Protokoll verwendet wird, wird diejenige Nutzungsinformation NI, die zur Herausforderung HEF der Kommunikationseinheit KE bestimmt ist, in eine Informationszeile mit einem Namen "WWW-Authenticate" eingefügt, siehe IETF RFC 3310 und IETF RFC 2617 "HTTP Authentification: Basic and Digest Access Authentification". In analoger Weise werden alle zweiten Schlüssel, die zur Verschlüsselung, zur Authentifizierung und zur Sicherung der Integrität benötigt werden, behandelt. Zusätzlich kann in dieser fünften Nachricht N5 eine zu erwartende Antwort AEH auf die Herausforderung HEF enthalten sein. Dies ermöglicht dem zweiten Netzwerkelement NW2, eine von der Kommunikationseinheit KE aufgrund der Herausforderung HEF gesendeten Antwort AGH bezüglich ihrer Richtigkeit mit der erwarteten Antwort AEH zu prüfen. In diesem Fall ist die Weiterleitung dieser Antwort AGH an das dritte Netzwerkelement NW3 zur Überprüfung der Echtheit nicht mehr notwendig.

Eine oder mehrere Filteranweisungen FW können in einem neuen Typ von Nachrichtenkörper in dieser fünften Nachricht N5, die beispielsweise unter Verwendung des HTTP-Protokolls in Form einer HTTP-Nachricht gebildet wird, enthalten sein. Dieser neue Typ von Nachrichtenkörper ist über eine eindeutige Beschreibung identifizierbar. Dies ist in der Praxis zweckmäßig, da diese eindeutige Beschreibung in der eigentlichen HTTP-Nachricht in einer Informationszeile mit einem Namen "Content-Type" enthalten ist, die beispielsweise nach dem Standard IETF RFC 2045 "Multipurpose Internet Mail Extensions (MIME) Part One: Format of Internet Message Bodies" gebildet wird. Dadurch wird es dem zweiten Netzwerkelement NW2 ermöglicht, lediglich anhand dieser eindeutigen Beschreibung den Inhalt der HTTP-Nachricht festzustellen, beispielsweise ob Filteranweisungen FW darin enthalten sind.

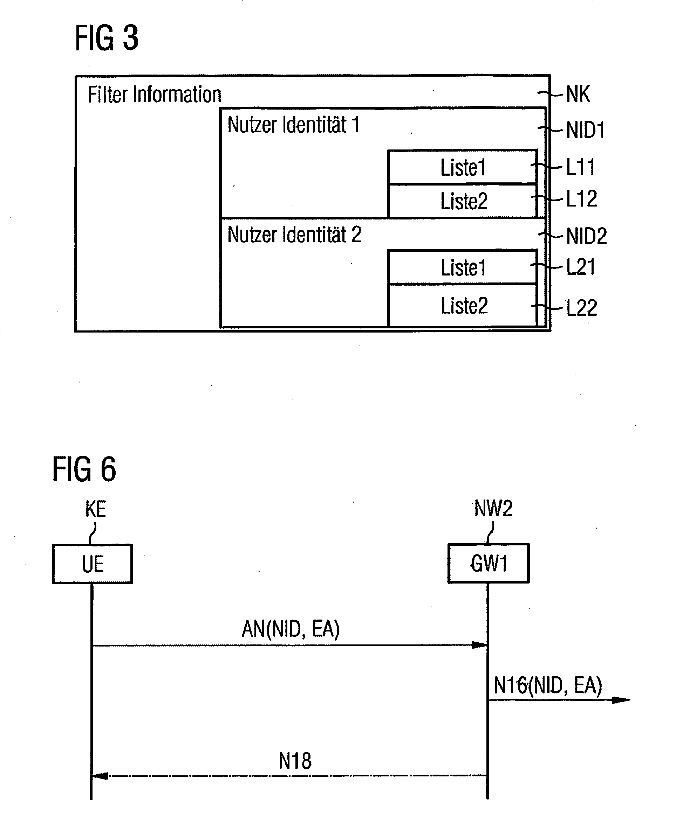

Figur 3 zeigt beispielhaft die Struktur mehrerer Filteranweisungen FW, die in einem Nachrichtenkörper NK enthalten sind. Dieser Nachrichtenkörper NK umfasst jeweils zwei Listen L11, L12 bzw. L21, L22 für jede Nutzeridentität NID1 bzw. NID2. Die jeweilige erste Liste L11 bzw. L21 der jeweiligen Nutzeridentität NID1 bzw. NID2 umfasst eine Liste von zu protokollierenden Empfängeradressen XEA. Die jeweilige zweite Liste L12 bzw. L22 der jeweiligen Nutzeridentität NID1 bzw. NID2 gibt eine oder mehrere negative Empfängeradressen NEA an, die von der Kommunikationseinheit KE nicht adressierbar sind und/oder eine oder mehrere positive Empfängeradressen PEA, die von der Kommunikationseinheit KE adressierbar sind.

Nach Empfang der fünften Nachricht N5 entnimmt das zweite Netzwerkelement NW2 in einem zweiten Schritt A2 den zweiten Schlüssel SP2 aus der Informationszeile mit einem Namen "WWW-Authenticate". Anhand der Informationszeile mit einem Namen "Content-Type" erkennt das zweite Netzwerkelement NW2, dass im Nachrichtenkörper NK eine oder mehrere Filteranweisungen FW enthalten sind, und entnimmt dies ebenfalls. Anschließend übermittelt das zweite Netzwerkelement NW2 diese modifizierte fünfte Nachricht N5 als sechste Nachricht N6 an die Kommunikationseinheit KE. Die Kommunikationseinheit KE entnimmt im Folgenden die Herausforderung HEF aus der Informationszeile mit einem Namen "WWW-Authenticate". Mit Hilfe einer oder mehrerer, auf einer SIM-Karte (SIM - Subscriber Identication Module) der Kommunikationseinheit KE gespeicherten Informationen, wird nun ein passender erster Schlüssel SP1 berechnet, der für die Verschlüsselung der Nachrichten zwischen der Kommunikationseinheit KE und dem zweiten Netzwerkelement NW2 sowie für die Authentifizierung und Sicherung der Integrität, verwendet werden kann. Der erste Schlüssel SP1 und der dazugehörige zweite Schlüssel SP2 bilden ein zusammengehöriges Schlüsselpaar SCP. Außerdem berechnet die Kommunikationseinheit KE mit Hilfe des ersten Schlüssels SP1 die Antwort AGH auf die Herausforderung HEF.

### 1.6 Modifizierte Anfragenachricht

In einem nächsten Schritt schickt die Kommunikationseinheit KE eine modifizierte Anfragenachricht ANM an das zweite Netzwerkelement NW2. Für den Fall, dass für die modifizierte Anfragenachricht ANM die HTTP-Syntax verwendet wird, entspricht diese modifizierte Anfragenachricht ANM einem HTTP-Request. Diese modifizierte Anfragenachricht ANM umfasst sowohl die Empfängeradresse EA, von der der Kommunikationseinheit KE Nutzdaten ND zugesandt werden sollen, als auch eine Informationszeile mit einem Namen "Authorization". Diese Informationszeile enthält neben der Nutzeridentität NID auch die Antwort AGH auf die Herausforderung HEF.

Nach Empfang der modifizierten Anfragenachricht ANM überprüft das zweite Netzwerkelement NW2 in einem dritten Entscheidungsschritt A3 anhand der in der Informationszeile mit einem Namen "Authorization" enthaltenen Nutze-ridentität NID, ob das zweite Netzwerkelement NW2 bereits Authentifizierungsinformationen für diese Kommunikationseinheit KE gespeichert hat. Dies ist nun nach Durchlaufen der vorherigen Schritte dieses Ausführungsbeispiels gegeben. Daher entnimmt das zweite Netzwerkelement NW2 der modifizierten Anfragenachricht ANM die Informationszeile mit einem Namen "Authorization". Mit Hilfe der im zweiten Netzwerkelement NW2 gespeicherten zweiten Schlüssel SP2 wird in einem nächsten Schritt die Richtigkeit der Antwort AGH auf die Herausforderung HEF überprüft. Falls die übermittelte Antwort AGH nicht korrekt ist, wird die modifizierte Anfragenachricht ANM mittels einer zehnten Nachricht N10 abgewiesen. Ergibt diese Überprüfung eine korrekte Übereinstimmung mit der erwarteten Antwort AEH auf die Herausforderung HEF, so wird in einem vierten Entscheidungsschritt A4 geprüft, ob die in der modifizierten Anfragenachricht ANM enthaltene Empfängeradresse EA für die Kommunikationseinheit KE adressierbar ist. Für den Fall, dass diese Empfängeradresse EA mit einer negativen Empfängeradresse NEA übereinstimmt, wird die modifizierte Anfragenachricht ANM zur Übermittlung von Nutzdaten ND abgelehnt. Dies wird der Kommunikationseinheit KE mittels einer zehnten Nachricht N10 mitgeteilt. Alternativ kann anstelle der Überprüfung der Empfängeradresse EA mit Hilfe von mindestens einer negativen Empfängeradresse NEA, die Prüfung anhand von mindestens einer positiven Empfängeradresse PEA stattfinden. Hierbei wird geprüft, ob die Empfängeradresse EA einer positiven Empfängeradresse PEA entspricht. Falls dies nicht zutrifft, wird die modifizierte Anfragenachrizht ANM abgelehnt.

### 1.7 Protokollierung

Für den Fall, dass die Empfängeradresse EA adressierbar ist, wird weiterhin geprüft, ob die Empfängeradresse EA einer zu protokollierenden Empfängeradresse XEA entspricht, für die das zweite Netzwerkelement NW2 die Datenmenge separat erfassen soll. Ist dies der Fall, wird ein neuer erster Datensatz DS1 zum Datenaufkommen im zweiten Netzwerkelement NW2 angelegt, der vorzugsweise mindestens folgende Datensatzelemente umfasst:
Eindeutige Identität des Datensatzes;
   - Empfängeradresse EA, auf die die Kommunikationseinheit KE zugreift;
   - Datenmenge;
   - Anzahl der Zugriffe auf diese Empfängeradresse EA.

Entspricht die Empfängeradresse EA keiner zu protokollierenden Empfängeradresse XEA, so wird ein neuer zweiter Datensatz DS2 zum Datenaufkommen angelegt, der vorzugsweise folgende Datensatzelemente umfasst:
- eindeutige Identität des Datensatzes ;
- Datenmenge.

Dieser zweite Datensatz DS2 bzw. das Datensatzelement mit der Angabe der Datenmenge wird immer dann aktualisiert, wenn zwischen der Kommunikationseinheit KE und einer Empfängeradressen EA eine oder mehrere Nachrichten, die möglicherweise Nutzdaten ND umfassen, ausgetauscht werden, die laut entsprechender Filteranweisung FW keiner zu protokollierenden Empfängeradresse XEA entsprechen.

Alle ersten bzw. zweiten Datensätze DS1 bzw. DS2 werden in einer Protokolldatei PD auf einem Speicherelement SM gespeichert.

Anschließend wird aus der modifizierten Anfragenachricht ANM eine achte Nachricht N8 generiert, die an eine nachgeschaltete zweite Netzwerkeinheit NW2 bzw. an eine durch die Empfängeradresse EA adressierte Einheit weitergeleitet wird. Diese zweite Netzwerkeinheit NE2 befindet sich im öffentlichen, paket-orientierten Netzwerk PN. Die Antwort auf diese achte Nachricht N8, in Figur 2 als neunte Nachricht N9 realisiert, wird nach Empfang durch das zweite Netzwerkelement NW2 dem entsprechenden Datensatz DS1 bzw. DS2 zugeordnet, mit dem bereits die modifizierte Anfragenachricht ANM protokolliert wurde. Im Anschluss daran wird durch das zweite Netzwerkelement NW2 die neunte Nachricht N9 mittels einer siebten Nachricht N7 an die Kommunikationseinheit KE weitergeleitet.

### 1.8 Auswertung der Protokolldatei

Zu einem späteren Zeitpunkt kann das zweite Netzwerkelement NW2 die Protokolldatei PD über eine achte Verbindung V8 mittels einer Protokollnachricht PDN an eine Auswerteeinheit AWE, beispielsweise eine Vergebührungsstelle, weiterleiten. Diese Auswerteeinheit AWE wertet einen oder mehrere erste bzw. zweite Datensätze DS1 bzw. DS2 der Protokolldatei PD aus, um daraus beispielsweise eine Rechnung für die Kommunikationseinheit KE zu erstellen.

Außerdem können ein oder mehrere erste bzw. zweite Datensätze DS1 bzw. DS2 zum Datenaufkommen durch die Auswerteeinheit AWE derart ausgewertet werden, dass daraus Steuerinformationen zur Optimierung des Datenverkehrs innerhalb eines oder mehrerer Netzwerke, wie beispielsweise für das Heimnetzwerk HN, generiert werden können.

Das Verwenden von Filteranweisungen FW ist in diesem Zusammenhang vorteilhaft, da dies eine Vergebührung in Abhängigkeit vom übertragenen Inhalt, z.B. von den Nutzdaten ND, ermöglicht. So können Zugriffe auf einen Presence-Server separat erfasst werden, in dem die Adresse des Presence-Servers gefiltert wird. Es ist außerdem für die Praxis vorteilhaft, dass die Vergebührung nicht von dem darunter liegenden Transportnetzwerk, wie beispielsweise GPRS, abhängig ist. Das Erstellen von Datensätzen, wie z.B. dem ersten Datensatz DS1, zum Erfassen des Datenaufkommens geschieht lediglich in einem Netzwerkelement vom Typ Daten-Gateway, wie im Ausführungsbeispiel in dem zweiten Netzwerkelement NW2. Ein darunter liegendes GPRS-Transportnetzwerk wird möglicherweise die Verbindung zwischen der Kommunikationseinheit KE und dem ersten Netzwerkelement NW1, das direkt zum zweiten Netzwerkelement NW2 führt, gebührenfrei anbieten. Die Vergebührung läuft dann auch im Fall von GPRS lediglich über das zweite und/oder dritte Netzwerkelement NW2 bzw. NE3. Das GPRS-Transportnetzwerk muss dadurch keine Vergebührungsfunktion bereitstellen.

### 1.9 Erweiterungen und Variationen

Eine mögliche Erweiterung des Ausführungsbeispiels wird mit Hilfe von Figur 1 und Figur 2 näher erläutert. Hierzu wird zunächst eine zusätzliche modifizierte zweite Verbindung V2M zwischen dem ersten Netzwerkelement NW1 und dem zweiten Netzwerkelement NW2 in die Architektur von Figur 1 eingefügt. Diese modifizierte zweite Verbindung V2M ermöglicht dem zweiten Netzwerkelement NW2 dem ersten Netzwerkelement NW1 mitzuteilen, wenn dieses die erste Verbindung V1 zwischen der Kommunikationseinheit KE und dem ersten Netzwerkelement NW1 trennen soll. Schlägt beispielsweise die Authentifizierung der Kommunikationseinheit KE fehl, so kann das zweite Netzwerkelement NW2 das erste Netzwerkelement NW1 anweisen, die erste Verbindung V1 zu trennen und somit die durch diese erste Verbindung V1 belegte Funkressource wieder freizugeben. Dazu sendet das zweite Netzwerkelement NW2 nach Übermittlung der zehnten Nachricht N10 eine zwölfte Nachricht N12 an das erste Netzwerkelement NW1, um damit das erste Netzwerkelement NW1 aufzufordern die erste Verbindung V1 zu trennen. Die zwölfte Nachricht N12 beinhaltet eine eindeutige Identifizierung der zu trennenden Verbindung, wie zum Beispiel die erste Verbindung V1.

Gemäß einer Erweiterung des erfindungsgemäßen Verfahrens vergibt das erste Netzwerkelement NW1 bei Beginn der Konfiguration einer neuen Kommunikationsverbindung eine Verbindungsidentität VID. Die Konfiguration einer Kommunikationsverbindung bedeutet hierbei das Aufbauen einer oder mehrerer Verbindungen zwischen den jeweiligen Netzwerkelementen NEE und der Kommunikationseinheit KE, damit diese Kommunikationseinheit KE eine oder mehrere Anfragenachrichten AN an eine zweite Netzwerkeinheit NW2 schicken kann. Es können mehrere Kommunikationsverbindungen gleichzeitig für eine Kommunikationseinheit KE bestehen. Beispielsweise bestehen gleichzeitig für jeweils drei verschiedene Nutzeridentitäten NID einer Kommunikationseinheit KE jeweils drei verschiedene Kommunikationsverbindungen. Diese Verbindungsidentität VID identifiziert eindeutig eine Verbindung zwischen dem ersten und zweiten Netzwerkelement NW1 bzw. NW2 dieser neuen Kommunikationsverbindung. Mit Hilfe der IP-Adresse (IP - Internet Protocol) der Kommunikationseinheit KE und dieser Verbindungsidentität VID ist auch die Verbindung zwischen der Kommunikationseinheit KE und dem ersten Netzwerkelement NW1 eindeutig identifizierbar.

Das erste Netzwerkelement NW1 übermittelt diese Verbindungsidentität VID zusammen mit der IP-Adresse IPA der Kommunikationseinheit KE in einer elften Nachricht N11 dem zweiten Netzwerkelement NW2 mit. Das zweite Netzwerkelement NW2 quittiert den Empfang der elften Nachricht N11 mit einer vierzehnten Nachricht N14. Diese Realisierungsvariante ist vorteilhaft, da diese lediglich eine weitere Signalisierung zwischen dem ersten und zweiten Netzwerkelement NW1 bzw. NW2 erfordert. Die eindeutige Identifizierung dieser Kommunikationsverbindung ist somit dem ersten und zweiten Netzwerkelement NW1 bzw. NW2 bekannt. Dies ist in der Praxis zweckmäßig, da eine Kommunikationseinheit KE mehrere Kommunikationsverbindung mit einem ersten Netzwerkelement NW1 unter derselben IP-Adresse IPA besitzen kann. Gibt das zweite Netzwerkelement NW2 die IP-Adresse IPA und die Verbindungsidentität VID in der zwölften Nachricht N12 an, so erkennt das erste Netzwerkelement NW1 eindeutig, welche Kommunikationsverbindung bzw. Verbindung zwischen der Kommunikationseinheit KE und dem ersten Netwerkelement NW1 zu trennen ist. Das erste Netzwerkelement NW1 quittiert den Empfang der zwölften Nachricht N12 mittels einer dreizehnten Nachricht N13.

Die zusätzliche Signalisierung mit der elften und vierzehnten Nachricht N11 bzw. N14 kann außerdem noch dazu genutzt werden, eine GPRS - Vergebührungsinformation an das zweite Netzwerkelement NW2 zu senden. Das zweite Netzwerkelement N22 kann die GPRS - Vergebührungsinformation zu einem oder mehreren Datensätzen DS1 bzw. DS2 des zweiten Netzwerkelementes NW2, hinzufügen und diese an die Auswerteeinheit AWE übermitteln. Die Auswerteeinheit AWE kann die Datensätzen DS1 bzw. DS2 mit der Vergebührungsinformation des GPRS - Transportnetzwerks, zum Beispiel mit einer Vergebührungsfunktion, korrelieren und daraus eine Abrechung der Verbindungsgebühren für die Kommunikationseinheit KE erstellen.

Alternativ zur Verwendung einer Verbindungsidentität VID kann ein IPSec-Tunnel IIP (IPSec - Internet Protocol Security) benutzt werden. Beispielsweise kann dies mittels der Verwendung der IPSec-Technologie wie in IETF RFC 2401, "Security Architecture for the Internet-Protocol" geschehen. Diesem IPSec-Tunnel IIP wird eine Identität zugeordnet. Zur Trennung der Verbindung zwischen der Kommunikationseinheit KE und dem ersten Netzwerkelement NW1 überträgt das zweite Netzwerkelement NW2 dem ersten Netzwerkelement NW1 lediglich diese Identität des IPSec-Tunnels IIP. Diese Identität ist im ersten als auch zweiten Netzwerkelement NW1 bzw. NW2 eindeutig bekannt. Das erste Netzwerkelement NW1 kennt die Abbildung der Identität des IPSec-Tunnels IIP zu der dazugehörigen Verbindung zwischen dem ersten Netzwerkelement NW1 und der Kommunikationseinheit KE.

Für diese Lösung wird jeweils ein IPSec-Tunnel zwischen dem ersten und zweiten Netzwerkelement NW1 bzw. NW2 für jede Kommunikationsverbindung einer Kommunikationseinheit KE bereitgestellt. Diese Alternative ist in der Praxis zweckmäßig, da keine zusätzliche Signalisierung benötigt wird, um dem zweiten Netzwerkelement NW2 diese Identität des IPSec-Tunnels mitzuteilen. Die elfte bzw. vierzehnte Nachricht N11 bzw. N14 werden hierbei nicht benötigt.

Nach erfolgreicher Trennung der ersten Verbindung V1 zwischen der Kommunikationseinheit KE und dem ersten Netzwerkelement NW1, die durch die zwölfte Nachricht N12 durch das zweite Netzwerkelement NW2 veranlasst wurde, schickt das erste Netzwerkelement NW1 eine Bestätigungsnachricht N13 an das zweite Netzwerkelement NW2 zurück.

### 2. Zweites Ausführungsbeispiel

### 2.1 Vorrichtung und Aufbau

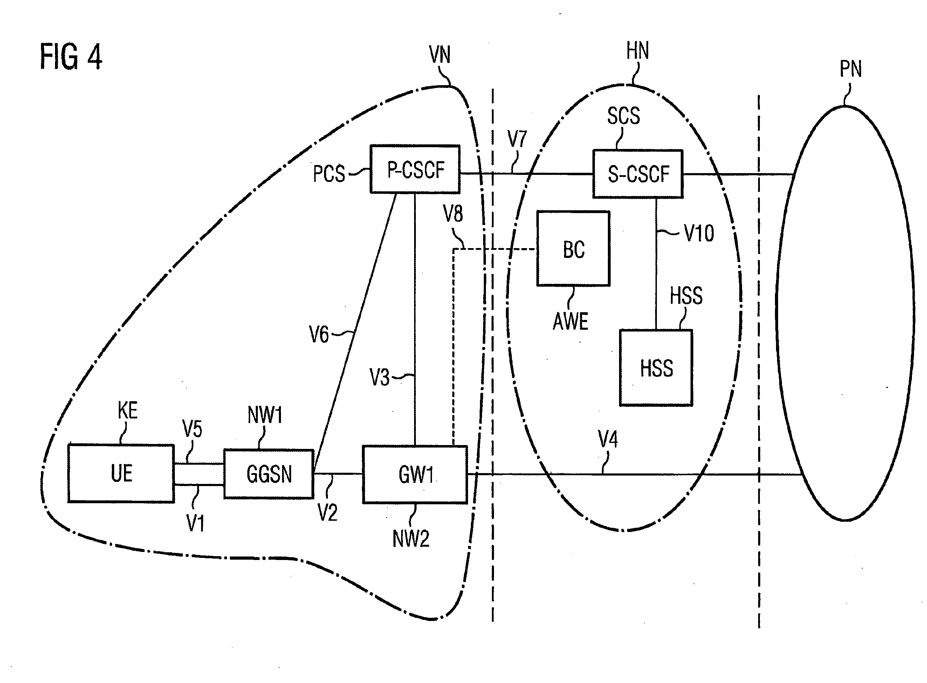

In einem weiteren Ausführungsbeispiel wird eine Alternative zur Authentifizierung und Sicherung der Integrität einer Kommunikationseinheit KE mit Hilfe eines zweiten Netzwerkelementes NW2 beschrieben. Ein zweites Netzwerkelement NW2 kann in Form eines Daten-Gateways realisiert werden. In Figur 4 ist eine mögliche Vorrichtung zur Durchführung dieses Ausführungsbeispiels dargestellt. Die Kommunikationseinheit KE befindet sich in einem besuchten Netzwerk VN. Eine oder mehrere Nachrichten können mit Hilfe der SIP-Syntax (SIP-Session Initiation Protocol) gebildet werden, siehe IETF RFC 3261, "SIP Initiation Protocol".

Die Kommunikationseinheit KE ist mit einem ersten Netzwerkelement NW1 im gesuchten Netzwerk VN über eine erste Verbindung V1 verbunden. Diese erste Verbindung V1 wird mit Hilfe der Prozedur mit einem Namen "PDP Context Activation Procedure" aufgebaut, wie sie in 3GPP TS 23.06.0 Version 5.3.0 beschrieben ist. Somit wird diese erste Verbindung V1 mit einem ersten PDP-Kontext realisiert. Während des Aufbaus dieser ersten Verbindung V1 wird festgelegt, dass diese lediglich für den Austausch von Nachrichten zwischen der Kommunikationseinheit KE und dem zweiten Netzwerkelement NW2 verwendet werden darf. Alle Nachrichten, die auf dieser ersten Verbindung V1 gesendet werden, werden automatisch von dem ersten Netzwerkelement NW1 über eine zweite Verbindung V2 an ein zweites Netzwerkelement NW2 weitergeleitet. Das zweite Netzwerkelement NW2 hat eine vierte Verbindung V4 in ein öffentliches, paket-orientiertes Netzwerk PN. Zusätzlich hat das zweite Netzwerkelement NW2 eine dritte Verbindung V3 zu einem SIP-Proxy PCS. Dieser SIP-Proxy PSC befindet sich dabei immer im gleichen Netzwerk wie das erste Netzwerkelement NW1, in diesem Ausführungsbeispiel also im besuchten Netzwerk VN. Außerdem wird mit Hilfe der Prozedur mit dem "Namen PDP Context Activation Procedure" eine weitere Verbindung mit einem Namen fünfte Verbindung V5 zwischen der Kommunikationseinheit KE und der ersten Netzwerkelement NW1 aufgebaut. Diese fünfte Verbindung V5 wird mittels eines zweiten PDP-Kontexts realisiert. Diese fünfte Verbindung V5 wird hauptsächlich für den Austausch von SIP-Nachrichten verwendet. Außerdem ist das erste Netzwerkelement NW1 über eine sechste Verbindung V6 mit dem SIP-Proxy PCS verbunden, der zusätzlich eine siebente Verbindung V7 zu dem zweiten SIP-Proxy SCS unterhält. Über die fünfte und sechste Verbindung V5 bzw. V6 werden lediglich Nachrichten ohne Nutzdaten ND zwischen der Kommunikationseinheit KE und dem SIP-Proxy PCS ausgetauscht. Der zweite SIP-Proxy SCS befindet sich immer im Heimnetz HN der Kommunikationseinheit KE und hat unter anderem die Funktion eines SIP-Registrars, siehe IETF RFC 3261, "SIP Initiation Protocol". Der zweite SIP-Proxy SCS verfügt über eine zehnte Verbindung V10 mit der Datenbank HSS. Um SIP-Nachrichten auch mit einer oder mehreren Kommunikationseinheiten KE im öffentlichen, paket-orientierten Netzwerk PN auszutauschen, ist der zweite SIP-Proxy SCS mit einer neunten Verbindung V9 mit diesem öffentlichen, paket-orientierten Netzwerk PN verbunden.

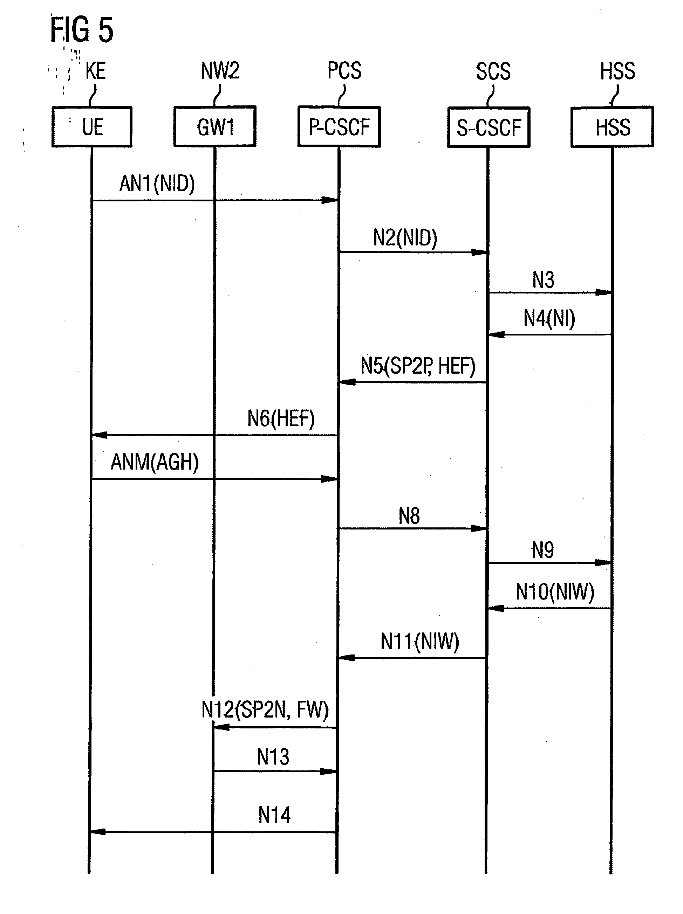

Mit Hilfe von Figur 5 werden die Nachrichten zum Austausch für die Authentifizierung und Sicherung der Integrität sowie Verteilung eines oder mehrerer Schlüssel gemäß diesem Ausführungsbeispiel näher erläutert. Zur Benutzung eines oder mehrerer IMS-Dienste (IMS - IP Multimedia Subsystem) registriert sich eine Kommunikationseinheit KE zunächst im IMS-Netz. Der Ablauf zur Registrierung ist in den Dokumenten IETF RFC 3261 und 3GPP TS 24.229, Version 5.2.0, "IP Multimedia Call Control Protocol based on SIP and SDP" detailliert beschrieben. Zusätzlich sind in dem Dokument 3GPP TS 24.228 "Signaling Flows for the IP Multimedia Call Control based on SIP and SDP" Beispiele für den Nachrichtenaustausch zu finden.

### 2.2 Anfragenachricht

Die Kommunikationseinheit KE sendet für die Registrierung zunächst eine Anfragenachricht AN mit einem Namen "Register" über die fünfte und sechste Verbindung V5 bzw. V6 an den SIP-Proxy PCS. Dieser leitet diese Anfragenachricht AN an den zweiten SIP-Proxy SCS im Heimatnetzwerk HN mittels einer zweiten Nachricht N2 weiter. Sowohl die Anfragenachricht AN als auch die zweite Nachricht N2 enthalten die Nutzeridentität NID. Die für die Authentifizierung zu verwendende Nutzeridentität NID ist, wie in den Dokumenten IETF RFC 3310 und IETF RFC 2617 beschrieben, in der jeweiligen Nachricht AN bzw. N2 in einer Informationszeile mit einem Namen "Authorization" enthalten.

### 2.3 Nutzungsinformation

Aufgrund dieser Nutzeridentität NID erfragt der zweite SIP-Proxy SCS nun mit Hilfe einer dritten Nachricht N3 eine oder mehrere Nutzungsinformationen NI von der Datenbank HSS ab. Für die weitere Betrachtung wird zwischen zwei verschiedenen zweiten Schlüsseln SP2P und SP2N unterschieden. Der eine zweite Schlüssel wird im Folgenden als zweiter Proxy-Schlüssel SP2P bezeichnet. Dieser umfasst mindestens einen Schlüssel zur Authentifizierung und Sicherung der Integrität sowie zur Verschlüsselung der Verbindung zwischen der Kommunikationseinheit KE und dem SIP-Proxy PCS und ist für den SIP-Proxy PCS bestimmt. Der andere zweite Schlüssel wird im Folgenden als zweiter Netzwerkschlüssel SP2N bezeichnet. Dieser umfasst mindestens einen Schlüssel zur Sicherung der Integrität und für die Verschlüsselung der Verbindung zwischen der Kommunikationseinheit KE und dem zweiten Netzwerkelement NW2 und ist für das zweite Netzwerkelement NW2 bestimmt. Im Folgenden wird davon ausgegangen, dass genau ein zweiter Netzwerkschlüssel SP2N und ein zweiter Proxy-Schlüssel SP2P existieren. Nach Empfang der dritten Nachricht N3 antwortet die Datenbank HSS mit einer vierten Nachricht N4, die eine oder mehrere Nutzungsinformationen NI enthält. Eine oder mehrere Nutzungsinformationen NI umfassen hierbei den zweiten Proxy-Schlüssel SP2P und die Herausforderung HEF, die zur Authentifizierung an die Kommunikationseinheit KE in einem späteren Schritt übermittelt wird. Der zweite SIP-Proxy SCS sendet nun diese Nutzungsinformationen NI in einer fünften Nachricht N5 mit einem Namen "401 Unauthorized" an den SIP-Proxy PCS. Diese fünfte Nachricht N5 umfasst sowohl den zweiten Proxy-Schlüssel SP2P als auch die Herausforderung HEF, die beide zur Authentifizierung der Kommunikationseinheit KE zwischen der Kommunikationseinheit KE und dem zweiten SIP-Proxy SCS verwendet werden. Der zweite Proxy-Schlüssel SP2P als auch die Herausforderung HEF werden gemäß der Dokumente IETF RFC 3310 und IETF RFC 2617 in eine Informationszeile mit einem Namen "WWW-Authenticate" in der fünften Nachricht N5 eingefügt. Der SIP-Proxy PCS entnimmt der fünften Nachricht N5 den Proxy-Schlüssel SP2P zur Sicherung der Integrität und Verschlüsselung und sendet diese modifizierte Nachricht in Form einer sechsten Nachricht N6 an die Kommunikationseinheit KE weiter. Die Kommunikationseinheit KE generiert nun aufgrund der Informationen in der Herausforderung HEF einen ersten Schlüssel, der im Folgenden als erster Proxy-Schlüssel SP1P bezeichnet wird, und der zur Sicherung der Integrität und Verschlüsselung eingesetzt wird. Außerdem erstellt die Kommunikationseinheit KE mit dem ersten Proxy-Schlüssel SP1P eine Antwort AGH auf die Herausforderung HEF.

### 2.4 Modifizierte Anfragenachricht

Anschließend sendet die Kommunikationseinheit KE eine modifizierte Anfragenachricht ANM mit einem Namen "Register" an den SIP-Proxy PCS. Diese modifizierte Anfragenachricht ANM enthält die Antwort AGH auf die Herausforderung. Gemäß den Dokumenten IETF RFC 3310 und IETF RFC 2617 enthält diese modifizierte Anfragenachricht ANM diese Antwort AGH in einer Informationszeile mit einem Namen "Authorization". Außerdem wird die Integrität dieser modifizierten Anfragenachricht ANM mit Hilfe des generierten ersten Proxy-Schlüssels SP1P sichergestellt.

Der SIP-Proxy PCS prüft nun mit Hilfe des, von dem zweiten SIP-Proxy SCS empfangenen, zweiten Proxy-Schlüssels SP2P, ob die modifizierte Anfragenachricht ANM nach seiner Erstellung durch die Kommunikationseinheit KE verändert wurde. Wenn sich nach der Prüfung der Integrität herausstellt, dass die Integrität in Ordnung ist, sendet der SIP-Proxy PCS diese modifizierte Anfragenachricht ANM in Form einer achten Nachricht N8 an den zweiten SIP-Proxy SCS weiter.

Der zweite SIP-Proxy SCS prüft anhand der Antwort AGH auf die Herausforderung HEF, ob die Kommunikationseinheit KE autorisiert ist, sich am IMS-Netz zu registrieren. Falls die Überprüfung ergibt, dass die Kommunikationseinheit KE dazu berechtigt ist, teilt der zweite SIP-Proxy SCS mit Hilfe einer neunten Nachricht N9 der Datenbank HSS mit, dass die Kommunikationseinheit KE nun registriert ist.

### 2.5 Weitere Nutzungsinformation

Die Datenbank HSS sendet daraufhin eine oder mehrere weitere Nutzungsinformationen NIW mittels einer zehnten Nachricht N10 an den zweiten SIP-Proxy SCS. Eine oder mehrere weitere Nutzungsinformationen NIW umfassen beispielsweise den zweiten Netz-Schlüssel NP2N, der zur Sicherung der Integrität und für die Verschlüsselung für die Verbindung zwischen der Kommunikationseinheit KE und dem zweiten Netzwerkelement NW2 eingesetzt wird. Außerdem sind eine oder mehrere Filteranweisungen FW enthalten, die zur Filterung des Nachrichtenverkehrs von dem zweiten Netzwerkelement NW2 benutzt werden. Alternativ zur Übermittlung weiterer Nutzungsinformationen NIW mittels der zehnten Nachricht N10 können diese weiteren Nutzungsinformationen NIW bereits mittels einer oder mehrere Nutzungsinformationen NI mit der vierten Nachricht N4 übertragen worden sein. Eine oder mehrere Filteranweisungen FW werden gemäß dem vorherigen Ausführungsbeispiel erstellt.

In einem nächsten Schritt sendet der zweite SIP-Proxy SCS eine elfte Nachricht N11 mit einem Namen "200 OK" an den SIP-Proxy PCS. Diese elfte Nachricht N11 umfasst einen oder mehrere zweite Netz-Schlüssel SP2N zur Sicherung der Integrität und für die Verschlüsselung, die von dem zweiten Netzwerkelement NW2 verwendet werden. Außerdem umfasst diese elfte Nachricht N11 zusätzliche Informationen, die die Kommunikationseinheit KE benötigt, um ihrerseits einen ersten Netz-Schlüssel SP1N zu berechnet. Jeweils ein erster Netz-Schlüssel SP1N und jeweils ein zweiter Netz-Schlüssel SP2N bilden ein zusammengehöriges Schlüsselpaar SCP zur Sicherung der Verbindung zwischen dem zweiten Netzwerkelement NW2 und der Kommunikationseinheit KE.

Alternativ kann anstelle von unterschiedlichen Schlüsseln für die jeweilige Verbindung zwischen der Kommunikationseinheit KE und dem zweiten Netzwerkelement NW2 und zwischen der Kommunikationseinheit KE und dem SIP-Proxy PCS ein gemeinsames Schlüsselpaar SCP verwendet werden.

### 2.6 Nutzeridentität

Einer Kommunikationseinheit KE können mehrere Nutzeridentitäten NID zugeordnet werden. Hierbei ist es in einer vorteilhaften Erweiterung in der Praxis zweckmäßig, jeweils einem oder mehreren Schlüssel zusätzlich jeweils eine oder mehrere Nutzeridentitäten zuzuordnen, mit denen der jeweilige Schlüssel verwendet werden darf. Das zweite Netzwerkelement NW2 kann den Austausch von Nachrichten zwischen der Kommunikationseinheit KE und dem zweiten Netzwerkelement NW2 unter Verwendung einer bestimmten Nutzeridentität, wie z.B. die erste Nutzeridentität NID1, erlauben bzw. unter einer anderen Nutzeridentität, wie z.B. die erste Nutzeridentität NID2, abweisen. So ist die Erstellung unterschiedlicher Nutzerprofile für eine Kommunikationseinheit möglich.

Der SIP-Proxy PCS entnimmt der elften Nachricht N11 den zweiten Netz-Schlüssel SP2N und alle Filteranweisungen FW. Anhand des Namens "200 OK" dieser elften Nachricht N11 erkennt der SIP-Proxy PCS, dass die Authentifizierung erfolgreich war. Der SIP-Proxy PCS sendet diese modifizierte elfte Nachricht N11 als vierzehnte Nachricht; N14 an die Kommunikationseinheit KE. Mit Hilfe der in dieser vierzehnten Nachricht N14 enthaltenen Informationen berechnet die Kommunikationseinheit KE nun ihrerseits einen ersten Netz-Schlüssel SP1N zur Sicherung der Integrität und für die Verschlüsselung. Dieser erste Netz-Schlüssel SP1N wird für den Nachrichtenaustausch zwischen der Kommunikationseinheit KE und dem zweiten Netzwerkelement NW2 verwendet. Des Weiteren übergibt der SIP-Proxy PCS seinen Netz-Schlüssel SP2N, sowie alle Filteranweisungen FW, mit Hilfe einer zwölften Nachricht N12 an das zweite Netzwerkelement NW2, welches den Empfang mit einer dreizehnten Nachricht N13 bestätigt.

### 2.7 Nachrichtenaustausch

Im Folgenden können die Kommunikationseinheit KE und die zweite Netzwerkelement NW2 Nachrichten gegenseitig austauschen. Dies wird mit Hilfe von Figur 6 näher erläutert. Die Kommunikationseinheit KE schickt eine Anfragenachricht AN an das zweite Netzwerkelement NW2. Diese Anfragenachricht AN enthält die Nutzeridentität NID und die gewünschte Empfängeradresse EA, von der Nutzdaten ND angefordert werden. Für den Fall, dass das HTTP-Protokoll verwendet wird, handelt es sich bei dieser Anfragenachricht AN um einen HTTP-Request. Diese Anfragenachricht AN ist mit Hilfe eines ersten Netz-Schlüssels SP1N zur Sicherung der Integrität gesichert und kann verschlüsselt sein. Das zweite Netzwerkelement NW2 ist in der Lage, mit einem seiner Netzwerk-Schlüssel SP2N die empfangene Anfragenachricht AN zu entschlüsseln und zu prüfen, ob diese Anfragenachricht AN nach dem Erstellen durch die Kommunikationseinheit KE geändert wurde. Das zweite Netzwerkelement NW2 prüft daraufhin, ob die gesendete Nutzeridentität NID zusammen mit dem benutzten ersten Netz-Schlüssel SP1N bzw. dem entsprechenden zweiten Netz-Schlüssel SP2N verwenden darf, und somit die Kommunikationseinheit KE autorisiert ist, eine oder mehrere Nachrichten zu senden.

Im Falle, dass die Kommunikationseinheit KE zum Senden von einer oder mehreren Nachrichten berechtigt ist, prüft das zweite Netzwerkelement NW2 weiterhin mit Hilfe der von dem SIP-Proxy PCS empfangenen Filteranweisungen FW, ob die Kommunikationseinheit KE unter der von ihr benutzten Nutzeridentität NID auf die in der Anfragenachricht AN enthaltenen Empfängeradresse EA zugreifen darf. Ist dies der Fall, so leitet das zweite Netzwerkelement diese Anfragenachricht AN in Form einer sechzehnten Nachricht N16 an die entsprechende Empfängeradresse EA weiter. Außerdem überprüft das zweite Netzwerkelement NW2, ob es eine oder mehrere Datensätze zum Datenaufkommen für den Zugriff auf die gewünschte Empfängeradresse EA anlegen soll. Das Anlegen eines oder mehrere Datensätze entspricht dabei der Prozedur, wie sie in dem vorhergehenden Ausführungsbeispiel beschrieben ist.

Für den Fall, dass die Kommunikationseinheit KE nicht autorisiert ist, unter der genannten Nutzeridentität NID Nachrichten mit dem zweiten Netzwerkelement NW2 auszutauschen oder unter der genannten Nutzeridentität NID gemäß einer oder mehrere Filteranweisungen FW nicht auf die gewünschte Empfängeradresse EA zugreifen darf, sendet das zweite Netzwerkelement NW2 eine achtzehnte Nachricht N18 an die Kommunikationseinheit KE zurück. Diese achtzehnte Nachricht N18 teilt der Kommunikationseinheit KE mit, dass diese nicht autorisiert ist, unter der genannten Identität NID auf die genannte Empfängeradresse EA zuzugreifen.

Schließlich können ein oder mehrere Datensätze über eine achte Verbindung V8 zur Auswertung an eine Auswerteeinheit AEW übermittelt werden.

### 3. Drittes Ausführungsbeispiel -

### Assoziation von SIP-Signalisierung und Nachrichten

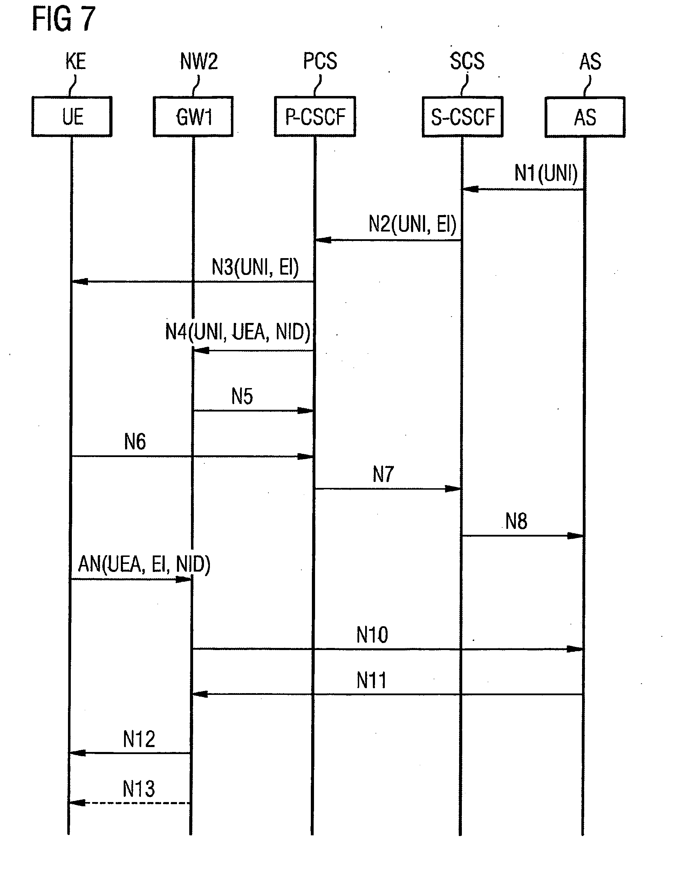

Gemäß einer Erweiterung des erfindungsgemäßen Verfahrens wird im folgenden Ausführungsbeispiel beschrieben, wie eine oder mehrere Nachrichten mit Nutzdaten ND zwischen einer Kommunikationseinheit KE und einem zweiten Netzwerkelement NW2 mit einer Signalisierungs-Transaktion assoziiert werden können. Es wird hierzu angenommen, dass die Kommunikationseinheit KE bereits am IMS-Netz registriert ist und somit sowohl die Authentifizierung erfolgreich abgeschlossen wurde als auch die entsprechenden Schlüssel zur Sicherung der Integrität für die Verschlüsselung im zweiten Netzwerkelement NW2 und in der Kommunikationseinheit KE vorhanden sind. Mit Hilfe von Figur 7 wird der Nachrichtenfluss für dieses Ausführungsbeispiel näher erläutert. Neben den aus Figur 4 bekannten Netzwerkelementen wird für dieses Ausführungsbeispiel ein neues Netzwerkelement mit einem Namen Anwendungsserver AS eingeführt. Bei dem Anwendungsserver AS handelt es sich in diesem Ausführungsbeispiel um einen Presence-Server.

Dieser Anwendungsserver AS soll die Kommunikationseinheit KE über die Änderung einer Präsenz-Information einer weiteren Kommunikationseinheit, möglicherweise Kommunikationseinheit KE2, unterrichten. Bei der Verwendung des SIP-Protokolls zur Signalisierung, benutzt in diesem Fall der Anwendungsserver AS eine SIP-Nachricht mit einem Namen "Notify". Hierbei ist es zweckmäßig, dass die SIP-Nachricht mit einem Namen "Notify" zusätzlich die aktuellen Präsenz-Informationen PI enthält. Wenn diese Präsenz-Informationen PI sehr groß sind, ist es in der Praxis vorteilhaft, diese nicht über die gleiche Verbindung zu übermitteln, wie die sonstigen SIP-Nachrichten, um damit einen oder mehrere SIP-Proxys, wie zum Beispiel SIP-Proxy PCS oder zweiter SIP-Proxy SCS, nicht zu überlasten. Hierzu ist im Dokument "Draft-IETS-SIP-CONTENT-INDIRECT-MECH-00", "A mechanism for content indirection in SIP-messages", siehe www.ietf.org, ein mögliches Verfahren beschrieben, mit dem eine Kommunikationseinheit auf eine Empfängeradresse, die eine oder mehrere Nutzdaten ND enthält, umgeleitet wird. Diese Nutzdaten ND entsprechen in diesem Ausführungsbeispiel den aktuellen Präsenz-Informationen PI. Dazu ist eine Umleitungsinformation UNI in der SIP-Nachricht enthalten. Diese umfasst beispielsweise eine umgeleitete Empfängeradresse UEA, wo diese Präsenz-Informationen PI zu finden sind. Außerdem gibt sie an, mit welchem Protokoll, zum Beispiel HTTP, diese Präsenz-Informationen PI abgefragt werden sollten.

Zunächst schickt der Anwendungsserver AS mit Hilfe einer ersten Nachricht N1 an den zweiten SIP-Proxy SCS die Umleitungsinformation UNI, die auch anzeigt, dass Präsenz-Informationen PI einer zweiten Kommunikationseinheit KE2 auf einer umgeleiteten Empfangsadresse UEA verfügbar ist. Diese Präsenz-Informationen PI sind für die Kommunikationseinheit KE bestimmt. Der zweite SIP-Proxy SCS erweitert diese erste Nachricht N1 mit einer Erfassungsidentität EI. Die Erfassungsidentität EI identifiziert eindeutig eine SIP-Transaktion, also in diesem Fall die Benachrichtigung der Kommunikationseinheit KE über die Präsenz-Informationen PI der zweiten Kommunikationseinheit KE2. Es ist möglich, diese Erfassungsidentität EI mit Hilfe einer Informationszeile mit einem Namen "Media-Authorization" (siehe IETF RFC 3310) in einer Nachricht zu signalisieren. Diese Erfassungsidentität EI teilt mit, dass diejenigen Nachrichten separat erfasst werden sollen, die aufgrund der in dieser ersten Nachricht N1 enthaltenen Umleitungsinformation UNI zwischen der Kommunikationseinheit KE und dem zweiten Netzwerkelement NW2 ausgetauscht werden sollen.

Im nächsten Schritt sendet der zweite SIP-Proxy SCS diese erweiterte Nachricht in Form einer zweiten Nachricht N2 an den SIP-Proxy PCS. Diese zweite Nachricht N2 umfasst die Umleitungsinformation UNI und die Erfassungsidentität EI. Weiterhin kann der zweite SIP-Proxy SCS auch die Anzahl der erlaubten Zugriffe und/oder die Zeitdauer, in der die Zugriffe auf die umgeleitete Empfängeradresse UEA erlaubt sind, festlegen. Außerdem legt der zweite SIP-Proxy SCS einen Datensatz DS an, der später für die Steuerung und Auswertung des Nachrichtenverkehrs verwendet werden kann. Dieser Datensatz DS umfasst vorzugsweise folgende Datensatzelemente:
- Art der Nachricht vom Anwendungsserver AS, zum Beispiel SIP-Nachricht vom Typ "Notify" oder "Info";
- Umgeleitete Empfängeradresse UEA, auf die in der jeweiligen Nachricht verwiesen wurde;
- Erfassungsidentität EI;
- Nutzeridentität NID;

Alternativ kann anstelle des zweiten SIP-Proxys SCS auch bereits der Anwendungsserver AS einen Datensatz DS anlegen und die Erfassungsidentität EI erstellen.

Der SIP-Proxy PCS leitet die zweite Nachricht N2 in Form einer dritten Nachricht N3 an die Kommunikationseinheit KE weiter. Parallel dazu übermittelt der SIP-Proxy PCS eine vierte Nachricht N4 an das zweite Netzwerkelement NW2. Diese vierten Nachricht N4 teilt dem zweiten Netzwerkelement NW2 mit, dass es den Nachrichtenverkehr mit der Kommunikationseinheit KE separat erfassen soll, falls in den Nachrichten der Kommunikationseinheit KE die Erfassungsidentität EI enthalten ist. Dazu ist die Erfassungsidentität EI und die umgeleitete Empfängeradresse UEA, auf die mittels dieser Erfassungsidentität EI zugegriffen werden darf, in der vierten Nachricht N4 enthalten. Dies ist in der Praxis vorteilhaft, da das zweite Netzwerkelement NW2 somit die Möglichkeit hat, Nachrichten an andere Empfängeradressen als der umgeleiteten Empfängeradresse UEA unter Zuhilfenahme dieser Erfassungsidentität EI zu unterbinden. Außerdem ist in der vierten Nachricht N4 die Nutzeridentität NID enthalten, mit der die Kommunikationseinheit KE Nachrichten mit dieser Erfassungsidentität EI senden darf.

Weiterhin kann diese vierte Nachricht N4 eine Wiederholungsinformation enthalten, die angibt, wie oft die Kommunikationseinheit KE die Erfassungsidentität EI verwenden darf. Falls Nachrichten auf der Verbindung zwischen der Kommunikationseinheit KE und dem zweiten Netzwerkelement NW2 verloren gehen, so kann mit Hilfe dieser Wiederholungsinformation angegeben werden, wie oft die Kommunikationseinheit KE diese Nachricht wiederholt schicken darf. Damit wird eine mehrmalige Übermittlung einer bestimmten Nachricht mit derselben Erfassungsidentität EI ermöglicht. Dennoch wird die Möglichkeit, dass eine Kommunikationseinheit KE dieselbe Erfassungsidentität EI für zusätzliche Nachrichten nutzt, eingeschränkt. Diese Wiederholungsinformation kann auch bereits von dem zweiten SIP-Proxy SCS in der zweiten Nachricht N2 an den SIP-Proxy PCS übergeben werden.

Der SIP-Proxy PCS und das zweite Netzwerkelement NW2 befinden sich immer im gleichen Netzwerk, beispielsweise in Figur 4 im besuchten Netzwerk VN. Währenddessen kann sich im Fall von "Roaming" der zweite SIP-Proxy SCS in einem anderen Netzwerk als die Kommunikationseinheit befinden, beispielsweise in Figur 4 im Heimnetzwerk HN. Daher hat der SIP-Proxy PCS Kenntnis darüber, welche Art von Verbindung, beispielsweise verlustbehaftet oder verlustlos, von dem zweiten Netzwerkelement NW2 unterstützt und verwendet wird.

Das zweite Netzwerkelement NW2 bestätigt nun den Empfang der vierten Nachricht N4 mit Hilfe einer fünften Nachricht N5. Die Kommunikationseinheit KE bestätigt den Empfang der dritten Nachricht N3 mit Hilfe einer sechsten Nachricht N6. Nach Empfang dieser sechsten Nachricht N6 leitet der SIP-Proxy PCS diese Nachricht in Form einer siebten Nachricht N7 zum zweiten SIP-Proxy SCS weiter, der anschließend diese siebte Nachricht N7 in Form einer achten Nachricht N8 an den Anwendungsserver AS weiterleitet. Damit hat der Anwendungsserver AS Kenntnis, dass die Kommunikationseinheit KE Umleitungsinformationen UNI erhalten hat.

Anschließend sendet die Kommunikationseinheit KE eine Anfragenachricht AN an das zweite Netzwerkelement NW2, um eine oder mehrere Nutzdaten ND von der in der dritten Nachricht N3 angegebenen umgeleiteten Empfängeradresse UEA anzufordern. Wird für die Anfragenachricht AN das HTTP-Protokoll verwendet, handelt es sich um einen HTTP-Request. Diese umfasst sowohl die umgeleiteten Empfängeradresse UEA als auch die Nutzeridentität NID. Diese Nutzeridentität NID ist in dieser Anfragenachricht AN, wie in IETF RFC 3310 und IETF RFC 2617 beschrieben, in der Informationszeile mit einem Namen "Authorization" enthalten. Zusätzlich wird die Erfassungsidentität EI in diese Anfragenachricht AN integriert.

Diese Erfassungsidentität EI kann in einer möglichen Erweiterung des Ausführungsbeispiels bei Verwendung des HTTP-Protokölls für die Anfragenachricht AN in eine neu zudefinierenden Informationszeile mit einem Namen "Access Authorization" enthalten sein.

Das zweite Netzwerkelement NW2 prüft anhand der von dem SIP-Proxy PCS empfangenen Informationen, ob die Kommunikationseinheit KE autorisiert ist, unter der in der Anfragenachricht AN enthaltenen Nutzeridentität NID, auf die angegebene umgeleiteten Empfängeradresse UEA unter Angabe der Erfassungsidentität EI zuzugreifen. Nachdem die Prüfung den Zugriff erlaubt hat, leitet das zweite Netzwerkelement NW2 diese Anfragenachricht AN an die umgeleiteten Empfängeradresse UEA weiter. Dies geschieht in Form einer zehnten Nachricht N10. Außerdem erfasst das zweite Netzwerkelement nun den Nachrichtenaustausch aufgrund dieser Anfragenachricht AN separat. Dazu legt das zweite Netzwerkelement einen zweiten Datensatz DS2 an, der vorzugsweise folgende Datensatzelemente umfasst:
- Erfassungsidentität EI ;
- Umgeleiteten Empfängeradresse UEA, auf die die Kommunikationseinheit KE zugreift;
- Nutzeridentität NID;
- Größe aller Nachrichten;
- Anzahl der Nachrichten, die unter der Erfassungsidentität EI ausgetauscht wurden.

Die Antwort auf die zehnte Nachricht N10 wird mittels einer elften Nachricht N11 an das zweite Netzwerkelement N22 zungeschickt. Diese elfte Nachricht N11 wird in dem zweiten Datensatz DS2 erfasst und danach an die Kommunikationseinheit KE in Form einer zwölften Nachricht N12 weitergeleitet.

Für den Fall, dass die Kommunikationseinheit KE nicht autorisiert war, die Anfragenachricht AN an das zweite Netzwerkelement NW2 zu senden, schickt das zweite Netzwerkelement NW2 eine dreizehnte Nachricht N13 an die Kommunikationseinheit KE zurück. Diese dreizehnte Nachrichte N13 teilt mit, dass die Anfragenachricht AN nicht weitergeleitet wurde. Die zehnte, elfte und zwölfte Nachrichten N10 bzw. N11 bzw. N12 werden in diesem Falle nicht verschickt.

### 3.1 Auswertungen der Datensätze

In einem nächsten Schritt kann das zweite Netzwerkelement NW2 diesen zweiten Datensatz DS2 zur Auswertung und Steuerung an eine Auswerteeinheit AWE, beispielsweise einem Vergebührungs-Center, zusenden. Zusätzlich kann auch der Datensatz DS an die Auswerteeinheit AWE übermittelt werden.

Mit Hilfe beider Datensätze DS und DS2 kann die Auswerteeinheit AWE nun die Nachrichten mit Signalisierungsinformation, also beispielsweise die SIP-Transaktionen, und die Nachrichten zwischen der Kommunikationseinheit KE und dem zweiten Netzwerkelement NW2 miteinander korrelieren. Die Erfassungsidentität EI identifiziert hierbei diejenigen Nachrichten, die aufgrund einer bestimmten SIP-Transaktion generiert wurden. Dies ist in der Praxis vorteilhaft, da diejenigen Nachrichten zwischen der Kommunikationseinheit KE und dem zweiten Netzwerkelement NW2, die durch SIP-Signalisierung angestoßen worden sind, anders ausgewertet, wie z.B. vergebührt, werden können als der sonstige Nachrichtenverkehr. Beispielsweise können Nachrichten mit Nutzdaten ND, die Bilder oder Internet-Seiten enthalten, mit einem höheren Tarif belegt werden, als diejenigen Nachrichten, die durch die SIP-Signalisierung erzeugt wurden. Zusätzlich kann auch abhängig vom Datenvolumen der übertragenen Nachrichten ein Auswertekriterium abgeleitet werden. Beispielsweise wird bei einer größeren übertragenen Datenmenge der Preis pro übertragene Datenmengeneinheit günstiger. Daneben kann ein Auswertekriterium anhand der Zugriffe auf bestimmte Empfängeradressen generiert. So werden beispielsweise bestimmten Empfängeradressen kostenpflichtige Abrufdienste zugeordnet, z.B. Abfrage einer Telefonnummer bei einer internetbasierten Telefonauskunft. Aufgrund dieses Auswahlkriteriums werden die Zugriffe auf diese bestimmten Empfängeradressen mit einer speziellen Vergebührung abgerechnet.

Zusätzlich kann der mehrmalige Zugriff auf eine Empfängeradresse unterschiedlich ausgewertet werden. Möglichweise ist der erstmalige Zugriff auf eine bestimme Empfängeradresse gebührenfrei, während jeder weitere Zugriff kostenpflichtig ist. In der Praxis kann es auch zweckmäßig sein, die Analyse der übertragenen Nachrichten von der übertragenen Nutzeridentität NID abhängig zu machen. Möglicherweise ist eine bestimmte Nutzeridentität NID einer bestimmten Applikation AP zugeordnet, die kostenlos benutzt werden kann.

Neben der Auswertung eines oder mehrere Datensätze zum Zweck der Vergebührung einer Kommunikationseinheit, kann die Auswerteeinheit AWE aufgrund dieser Auswertung auch den Nachrichtenverkehr innerhalb eines oder mehrerer Netzwerke steuern und/oder optimieren. Beispielsweise kann so eine Empfängeradresse eines Datenservers, der Nutzdaten enthält, auf die häufig zugegriffen werden und die eine große zu übertragende - Datenmenge verursachen, herausgefiltert werden. In einem weiteren Schritt können diese Nutzdaten auf mehrere Datenserver, möglicherweise in unterschiedlichen Netzwerken, kopiert werden, um so das zu übertragende Datenvolumen besser zu verteilen.

## Patentansprüche

1. Verfahren zur Steuerung und Auswertung eines Nachrichtenverkehrs einer Kommunikationseinheit (KE) durch eine erste Netzwerkeinheit (NE1) innerhalb eines Mobilfunksystems (MS), indem alle Nachrichten des Nachrichtenverkehrs über die erste Netzwerkeinheit (NE1) geschickt werden,
indem durch die erste Netzwerkeinheit (NE1) mit Hilfe einer oder mehrerer Nutzungsinformationen (NI) der Kommunikationseinheit (KE) entschieden wird, ob eine oder mehrere Nachrichten an eine zweite Netzwerkeinheit (NE2) zur Weiterbearbeitung weitergeleitet oder abgeblockt werden,
und indem durch die erste Netzwerkeinheit (NE1) mit Hilfe einer oder mehrerer Nutzungsinformationen (N1) der Kommunikationseinheit (KE) entschieden wird, ob die jeweilige Nachricht des Nachrichtenverkehrs durch die erste Netzwerkeinheit (NE1) in einer Protokolldatei (PD) protokolliert wird,
**dadurch gekennzeichnet, dass**
ein spezifischer Satz von Nutzungsinformationen (NI) jeweils einer Nutzeridentität (NID) zugeordnet wird, wobei der spezifische Satz von Nutzungsinformationen (NI) zur Steuerung und Auswertung mindestens einer Nachricht des Nachrichtenverkehrs der Kommunikationseinheit (KE) verwendet wird,
die Nutzeridentität (NID) einer Applikation (AP) der Kommunikationseinheit (KE) zugeordnet wird.

2. Verfahren nach Anspruch 1,
**dadurch gekennzeichnet,**
**dass** eine oder mehrere Nutzungsinformationen (NI) von einer Datenbank (HSS) abgerufen werden, die die Steuerung und Auswertung einer oder mehrerer Nachrichten des Nachrichtenverkehrs der Kommunikationseinheit (KE) bestimmen.

3. Verfahren nach einem der vorhergehenden Ansprüche, **dadurch gekennzeichnet,**
**dass** in mindestens eine Nutzungsinformation (NI) zumindest eine der folgenden Filteranweisungen (FW) eingefügt wird:
- Eine oder mehrere positive Empfängeradressen (PEA), die für die Kommunikationseinheit (KE) adressierbar sind;
- Eine oder mehrere negative Empfängeradressen (NEA) , die für die Kommunikationseinheit (KE) nicht adressierbar sind;
- Eine oder mehrere zu protokollierende Empfängeradressen (XEA), die von der ersten Netzwerkeinheit (NE1) protokolliert werden.

4. Verfahren nach einem der vorhergehenden Ansprüche, **dadurch gekennzeichnet,**
**dass** zu protokollierende Nachrichten des Nachrichtenverkehrs mit einer Erfassungsidentität (NI) **gekennzeichnet** werden.

5. Verfahren nach einem der vorhergehenden Ansprüche, **dadurch gekennzeichnet,**
**dass** durch die erste Netzwerkeinheit (NE1) die Protokolldatei (PD) mit Hilfe einer Protokollnachricht (PDN) zur Auswertung an eine Auswerteeinheit (AWE) weitergeleitet wird.

6. Verfahren nach Anspruch 5,
**dadurch gekennzeichnet,**
**dass** durch die Auswerteeinheit (AWE) die in der Protokolldatei (PD) protokollierten Nachrichten anhand mindestens einer der folgenden Kriterien ausgewertet wird:
- Nutzdaten (ND) der Nachricht;
- Empfängeradresse (EA) der Nachricht;
- Anzahl der Zugriffe auf die Empfängeradresse (EA);
- Datenmenge;
- Nachrichten, die mit einer bestimmten Nutzeridentität (NID) geschickt wurden;
- Nachrichten, die mit einer bestimmten Erfassungsidentität (EI) geschickt wurden.
- Korrelation von Nachrichten mit Signalisierungsinformationen und/oder Nutzdaten (ND).

7. Verfahren nach einem der vorhergehenden Ansprüche,
**dadurch gekennzeichnet,**
**dass** die Kommunikationseinheit (KE) zum Austausch von Nachrichten autorisiert wird,
und **dass** zur Bereitstellung eines sicheren Nachrichtenverkehrs ein oder mehrere Schlüsselpaare (SCP) verwendet werden.

8. Verfahren nach einem der vorhergehenden Ansprüche, **gekennzeichnet durch** die Verwendung in einer Architektur nach einem IP-Multimedia Subsystem und mit Hilfe des Session Initiation Protokolls.

9. Verfahren nach einem der vorhergehenden Ansprüche,
**dadurch gekennzeichnet,**
**dass** die erste Netzwerkeinheit (NE1) durch eine Gruppe von Netzwerkelementen (NEE) realisiert wird.

10. Erste Netzwerkeinheit (NE1) zur Steuerung und Auswertung eines Nachrichtenverkehrs einer Kommunikationseinheit (KE) innerhalb eines Mobilfunksystems (MS), insbesondere nach mindestens einem der vorhergehenden Ansprüche,
mit einer Empfangseinheit (EE2), mittels der alle Nachrichten des Nachrichtenverkehrs der Kommunikationseinheit (KE) empfangbar sind,
mit einer Sendeeinheit (SE2), mittels der alle Nachrichten des Nachrichtenverkehrs absendbar sind,
und mit einer Verarbeitungseinheit (VE2), mittels der entscheidbar ist, ob mindestens eine Nachricht des Nachrichtenverkehrs aufgrund einer oder mehrerer Nutzungsinformationen (NI) der Kommunikationseinheit (KE) an eine zweite Netzwerkeinheit (NE2) zur Weiterbearbeitung weitergeleitet oder abgeblockt wird, und mittels der entscheidbar ist, ob mindestens eine Nachricht des Nachrichtenverkehrs aufgrund einer oder mehrerer Nutzungsinformationen (NI) der Kommunikationseinheit (KE) durch die erste Netzwerkeinheit (NW1) in einer Protokolldatei (PD) protokolliert wird, wobei ein spezifischer Satz von Nutzungsinformationen (N1) jeweils einer Nutzeridentität (NID) zugeordnet wird, wobei der spezifische Satz von
Nutzungsinformationen (NI) zur Steuerung und Auswertung mindestens einer Nachricht des Nachrichtenverkehrs der Kommunikationseinheit (KE) verwendet wird, und wobei die Nutzeridentität (NID) einer Applikation (AP) der Kommunikationseinheit (KE) zugeordnet ist.

11. Kommunikationseinheit (KE) bei der durch eine erste Netzwerkeinheit (NE1) der Nachrichtenverkehr innerhalb eines Mobilfunksystems (MS) gesteuert und ausgewertet wird, insbesondere nach mindestens einem der vorherigen Ansprüche 1 mit 9, mit einer Empfangseinheit (EE1), mittels der alle Nachrichten des Nachrichtenverkehrs empfangbar sind, und mit einer Sendeeinheit (SE1), mittels der alle Nachrichten des Nachrichtenverkehrs absendbar sind.

## Claims

1. Method for controlling and evaluating message traffic of a communication unit (KE) by means of a first network unit (NE1) within a mobile radio system (MS), all messages of the message traffic being sent via the first network unit (NE1),
the first network unit (NE1) deciding, with the aid of one or more one items of useful information (NI) of the communication unit (KE), whether one or more messages are to be forwarded to a second network unit (NE2) for further processing or are to be blocked,
and the first network unit (NE1) determining, with the aid of one or more items of useful information (NI) of the communication unit (KE), whether a particular message of the message traffic is to be logged in a logfile (PD) by the first network unit (NE1),
**characterised in that**
a specific set of useful information (NI) is assigned in each case to a user identity (NID), with the specific set of useful information (NI) being used to control and evaluate at least one message of the message traffic of the communication unit (KE),
the user identity (NID) being allocated to an application (AP) of the communication unit (KE).

2. Method according to claim 1,
**characterised in that**
one or more items of useful information (NI) that determine the controlling and evaluation of one or more messages of the message traffic of the communication unit (KE) are called up from a database (HSS).

3. Method according to one of the preceding claims, **characterised in that**
at least one of the following filter instructions (FW) is inserted into at least one item of useful information (NI):
- one or more positive destination addresses (PEA) that are addressable for the communication unit (KE);
- one or more negative destination addresses (NEA) that are not addressable for the communication unit (KE);
- one or more destination addresses (XEA) that are to be logged that are logged by the first network unit (NE1).

4. Method according to one of the preceding claims, **characterised in that**
messages of the message traffic to be logged are identified with an acquisition identity (NI).

5. Method according to one of the preceding claims, **characterised in that**
the logfile (PD) is forwarded by the first network unit (NE1) using a logging message (PDN) to an evaluation unit (AWE) for evaluation.

6. Method according to claim 5,
**characterised in that**
the messages logged in the logfile (PD) are evaluated by the evaluation unit (AWE) using at least one of the following criteria:
- useful data (ND) of the message;
- destination address (EA) of the message;
- number of accesses to the destination address (EA);
- data quantity;
- messages that were sent with a specific user identity (NID);
- messages that were sent with a specific acquisition identity (EI) ;
- correlation of messages with signalling information and/or useful data (ND).

7. Method according to one of the preceding claims, **characterised in that**
the communication unit (KE) is authorised to exchange messages,
and one or more one key pairs (SCP) are used to provide a protected message traffic.

8. Method according to one of the preceding claims, **characterised by** use in an architecture in accordance with an IP multimedia subsystem with the aid of the session initiation protocol.

9. Method according to one of the preceding claims, **characterised in that**
the first network unit (NEI) is formed by a group of network elements (NEE).

10. First network unit (NE1) for controlling and evaluating message traffic of a communication unit (KE) within a mobile radio system (MS), in particular according to at least one of the preceding claims,
with a receiving unit (EE2) for receiving all messages of the message traffic of the communication unit (KE),
with a transmitting unit (SE2) for transmitting all messages of the message traffic,
and with a processing unit (VE2) for deciding whether at least one message of the message traffic is, on the basis of one or more items of useful information (NI) of the communication unit (KE), forwarded to a second network unit (NE2) for further processing or is blocked, said processing unit further deciding whether at least one message of the message traffic is, on the basis of one or more items of useful information (NI) of the communication unit (KE), logged by the first network unit (NE1) in a logfile (PD), with a specific set of useful information (NI) being assigned to a user identity (NID) in each case, with the specific set of useful information (NI) being used to control and evaluate at least one message of the message traffic of the communication unit (KE), and with the user identity (NID) being allocated to an application (AP) of the communication unit (KE).

11. Communication unit (KE) having message traffic controlled and evaluated within a mobile radio system (MS) by a first network unit (NE1), in particular according to at least one of the preceding claims 1 to 9, with a receiving unit (EE1) for receiving all messages of the message traffic, and with a transmitting unit (SE1) for transmitting all messages of the message traffic.

## Revendications

1. Procédé de commande et d'évaluation d'un trafic de messages d'une unité de communication (KE) par une première unité de réseau (NE1) dans un système radio mobile (MS), dans lequel :
- tous les messages du trafic de messages sont envoyés via la première unité de réseau (NE1) ;
- la première unité de réseau (NE1) décide, à l'aide d'une ou de plusieurs informations d'utilisation (NI) de l'unité de communication (KE), de la retransmission d'un ou de plusieurs messages à une deuxième unité de réseau (NE2) pour traitement subséquent ou de son/de leur blocage ;
- la première unité de réseau (NE1) décide, à l'aide d'une ou de plusieurs informations d'utilisation (NI) de l'unité de communication (KE), de la journalisation du message respectif du trafic de messages par la première unité de réseau (NE1) dans un fichier journal (PD),
**caractérisé en ce que** :
un jeu spécifique d'informations d'utilisation (NI) est respectivement associé à une identité d'usager (NID), le jeu spécifique d'informations d'utilisation (NI) étant utilisé pour la commande et l'évaluation d'au moins un message du trafic de messages de l'unité de communication (KE) ;
l' identité d'usager (NID) est associée à une application (AP) de l'unité de communication (KE).

2. Procédé selon la revendication 1, **caractérisé en ce que** sont tirées d'une base de données (HSS) une ou plusieurs informations d'utilisation (NI) qui déterminent la commande et l'évaluation d'un ou de plusieurs messages du trafic de messages de l'unité de communication (KE).

3. Procédé selon l'une des revendications précédentes, **caractérisé en ce qu'**est insérée, dans au moins une information d'utilisation (NI), au moins l'une des instructions de filtrage (FW) suivantes :
- une ou plusieurs adresses destinataires positives (PEA) qui sont adressables pour l'unité de communication (KE) ;
- une ou plusieurs adresses destinataires négatives (NEA) qui ne sont pas adressables pour l'unité de communication (KE) ;
- une ou plusieurs adresses destinataires à journaliser (XEA) qui sont journalisées par la première unité de réseau (NE1).

4. Procédé selon l'une des revendications précédentes, **caractérisé en ce que** des messages du trafic de messages à journaliser sont identifiés par une identité de détection (NI).

5. Procédé selon l'une des revendications précédentes, **caractérisé en ce que** la première unité de réseau (NE1), à l'aide d'un message de journalisation (PDN), retransmet le fichier journal (PD) pour évaluation à une unité d'évaluation (AWE).

6. Procédé selon la revendication 5, **caractérisé en ce que** les messages journalisés dans le fichier journal (PD) sont évalués par l'unité d'évaluation (AWE) à l'aide d'au moins l'un des critères suivantes :
- données utiles (ND) du message ;
- adresse destinataire (EA) du message ;
- nombre des accès à l'adresse destinataire (BA) ;
- quantité de données ;
- messages qui ont été envoyés avec une identité d'usager (NID) déterminée ;
- messages qui ont été envoyés avec une identité de détection (EI) déterminée ;
- corrélation de messages avec des informations de signalisation et/ou des données utiles (ND).

7. Procédé selon l'une des revendications précédentes, **caractérisé en ce que** l'unité de communication (KE) reçoit l'autorisation d'échanger des messages et **en ce qu'**une ou plusieurs paires de clés (SCP) sont utilisées pour fournir un trafic de messages sûr.

8. Procédé selon l'une des revendications précédentes, **caractérisé par** l'utilisation dans une architecture selon un sous-système multimédia IP et à l'aide du protocole d'initialisation de session.

9. Procédé selon l'une des revendications précédentes, **caractérisé en ce que** la première unité de réseau (NE1) est réalisée par un groupe d'éléments de réseau (NEE).

10. Première unité de réseau (NE1) pour la commande et l'évaluation d'un trafic de messages d'une unité de communication (KE) dans un système radio mobile (MS), en particulier selon au moins l'une des revendications précédentes,
- avec une unité réceptrice (EE2) au moyen de laquelle tous les messages du trafic de messages de l'unité de communication (KE) peuvent être reçus ;
- avec une unité émettrice (SE2) au moyen de laquelle tous les messages du trafic de messages peuvent être émis et
- avec une unité de traitement (VE2) au moyen de laquelle il peut être décidé de la retransmission d'au moins un message du trafic de messages sur la base d'une ou de plusieurs informations d'utilisation (NI) de l'unité de communication (KE) à une deuxième unité de réseau (NE2) pour traitement subséquent, ou de son blocage, et au moyen de laquelle il peut être décidé de la journalisation d'au moins un message du trafic de messages sur la base d'une ou de plusieurs informations d'utilisation (NI) de l'unité de communication (KE) par la première unité de réseau (NW1) dans un fichier journal (PD), un jeu spécifique d'informations d'utilisation (NI) étant respectivement associé à une identité d'usager (NID), le jeu spécifique d'informations d'utilisation (NI) étant utilisé pour la commande et l'évaluation d'au moins un message du trafic de messages de l'unité de communication (KE) et l'identité d'usager (NID) étant associée à une application (AP) de l'unité de communication (KE).

11. Unité de communication (KE) dans laquelle une première unité de réseau (NE1) commande et évalue le trafic de messages dans un système radio mobile (MS), en particulier selon au moins l'une des revendications précédentes 1 à 9, avec une unité réceptrice (EE1) au moyen de laquelle tous les messages du trafic de messages peuvent être reçus et avec une unité émettrice (SE1) au moyen de laquelle tous les messages du trafic de messages peuvent être émis.
